# EUROPEAN PATENT APPLICATION

(11) **EP 4 617 549 A1**
(43) Date of publication of application: **17.09.2025**
(21) Application number: 23888800.2
(22) Date of filing: 10.11.2023
(51) Int. Cl.: F16L 59/04, F16L 59/05, H01M 10/625, H01M 10/658

(54) **HEAT TRANSFER SUPPRESSION SHEET AND BATTERY PACK**

(30) Priority: 11.11.2022 JP 2022181036
(71) Applicant: IBIDEN CO., LTD., Ogaki-shi, Gifu 503-8604 (JP)
(72) Inventor: KUMANO, Keiji, Ibi-gun, Gifu 501-0695 (JP); IDO, Takahiko, Ibi-gun, Gifu 501-0695 (JP)
(74) Representative: Hoffmann Eitle
(86) International application number: PCT/JP2023/040660
(87) International publication number: WO 2024/101455

(57) **Abstract**

Provided are: a heat transfer suppression sheet including an elastic body, said sheet being able to handle swelling of a battery cell caused by normal charging/discharging, and being able to demonstrate elastic performance at the time of thermal runaway; and a battery pack including this heat transfer suppression sheet. The heat transfer suppression sheet (10) includes an elastic body (1) that is in a compressed state at less than 90°C and is released from the compressed state at 90°C or greater. The compressed state of the elastic body (1) is maintained by a binder substance. An insulation material (5) may be layered thereon, and in such a case, the compressed state may be maintained by a heat shrinkable enclosure (20). Furthermore, the elastic body (1) may be configured from a plurality of elastic body fragments (1A).

## Description

### TECHNICAL FIELD

The present invention relates to a heat transfer suppression sheet and a battery pack including the heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor. Note that, a lithium ion secondary battery, which has higher capacity and is capable of higher output than a lead-acid battery, a nickel-metal hydride battery, or the like, is mainly used for the battery cells.

In a battery pack, generally, battery cells are stacked and a heat transfer suppression sheet is interposed between adjacent battery cells. In the heat transfer suppression sheet, heat transfer between the battery cells is suppressed, and since the battery cells expand due to charging and discharging, the expansion is absorbed by an elastic body.

For example, Patent Literature 1 describes a heat transfer suppression sheet including a heat insulation material and an elastic body stacked on a surface of the heat insulation material, in which the elastic body includes an elastic protruding portion deformable by expansion of a battery cell, and a deformation space in which the elastic protruding portion moves in an outer circumferential direction orthogonal to a pressing direction is provided between the elastic protruding portion and the battery cell.

In addition, Patent Literature 2 describes a heat transfer suppression sheet including a heat insulation material and an elastic body having a specific compressive elastic modulus and compressive stress.

### CITATION LIST

### PATENT LITERATURE

Patent Literature 1: WO 2020/262080
Patent Literature 2: JP2021-140968A

### SUMMARY OF INVENTION

### TECHNICAL PROBLEM

However, neither of the heat transfer suppression sheets described in Patent Literatures 1 and 2 takes into consideration thermal runaway of the battery cell. In Patent Literature 2, the compressive elastic modulus and the compressive stress of the elastic body are specified, which are values defined in JIS K 6254, and the test temperature is room temperature.

In the battery pack, due to an internal short circuit, overcharge, or the like, a certain battery cell rapidly rises in temperature, thermal runaway in which heat generation continues thereafter may occur, and in some cases, flame may be generated. Then, heat or flame from the battery cell that has experienced thermal runaway may propagate to other adjacent battery cells to cause thermal runaway of the other battery cells. Therefore, it is sufficiently presumed that the elastic body of the heat transfer suppression sheet described in Patent Literatures 1 and 2 does not exhibit an elastic performance during the thermal runaway.

The present invention has been made in view of the above problems, and an object of the present invention is to provide a heat transfer suppression sheet including an elastic body that can cope with expansion of a battery cell due to normal charging and discharging and that can exhibit an elastic performance even during thermal runaway, and a battery pack including the heat transfer suppression sheet.

### SOLUTION TO PROBLEM

The above object of the present invention is achieved by the following configuration [1] relating to a heat transfer suppression sheet.
[1] A heat transfer suppression sheet including: an elastic body that remains in a compressed state at temperatures below 90°C and that is released from the compressed state at a temperature that is 90°C or higher.
   Preferred embodiments of the present invention relating to the heat transfer suppression sheet relate to the following [2] to [10].
[2] The heat transfer suppression sheet according to [1], in which the elastic body is maintained in the compressed state by a blended binder material.
[3] The heat transfer suppression sheet according to [1] or [2], in which the elastic body is stacked with a heat insulation material.
[4] The heat transfer suppression sheet according to [3], in which the elastic body and the heat insulation material are at least partially bonded to each other.
[5] The heat transfer suppression sheet according to [3] or [4], in which the elastic body is composed of a plurality of elastic body split pieces, and the elastic body split pieces are scattered on a surface of the heat insulation material.
[6] The heat transfer suppression sheet according to [5], in which when released from the compressed state, peripheral end surfaces of the adjacent elastic body split pieces abut against each other to fill a gap between the elastic body split pieces or to form a mountain-shaped void.
[7] The heat transfer suppression sheet according to [1], in which the elastic body is stacked with a heat insulation material, and the compressed state is maintained by a heat-shrinkable surrounding body.
[8] The heat transfer suppression sheet according to [7], in which the elastic body and the heat insulation material are at least partially bonded to each other.
[9] The heat transfer suppression sheet according to [7] or [8], in which the elastic body is composed of a plurality of elastic body split pieces, and the elastic body split pieces are scattered on a surface of the heat insulation material.
[10] The heat transfer suppression sheet according to [9], in which when released from the compressed state, peripheral end surfaces of the adjacent elastic body split pieces abut against each other to fill a gap between the elastic body split pieces or to form a mountain-shaped void.
   The above object of the present invention is achieved by the following configuration [11] relating to a battery pack.
[11] A battery pack including: a plurality of battery cells; and the heat transfer suppression sheet according to any one of [1] to [10], in which the plurality of battery cells are connected in series or in parallel.

### ADVANTAGEOUS EFFECTS OF INVENTION

The heat transfer suppression sheet according to the present invention includes an elastic body that maintains a compressed state at temperatures below 90°C and that expands and releases from the compressed state at a temperature that is 90°C or higher, and can cope with expansion of a battery cell due to normal charging and discharging, and can exhibit an elastic performance even during thermal runaway.

In addition, since the battery pack according to the present invention includes the heat transfer suppression sheet described above, the battery pack can cope with expansion of a battery cell due to normal charging and discharging, and can exhibit an elastic performance even during thermal runaway, and safety is further enhanced.

### BRIEF DESCRIPTION OF DRAWINGS

[Fig. 1] Fig. 1 is a perspective view showing a structure of a heat transfer suppression sheet according to a first embodiment of the present invention.
[Fig. 2] Fig. 2 is a perspective view showing an example in which an elastic body is composed of elastic body split pieces.
[Fig. 3] Fig. 3 is a cross-sectional view showing a mountain-shaped void formed by adjacent elastic body split pieces when the elastic body split pieces expand.
[Fig. 4] Fig. 4 is a cross-sectional view showing a structure of a heat transfer suppression sheet according to a second embodiment of the present invention.
[Fig. 5] Fig. 5 is a cross-sectional view showing a battery pack according to one embodiment of the present invention.

### DESCRIPTION OF EMBODIMENTS

The inventors of the present invention have found that, by adopting a configuration in which an elastic body that maintains a compressed state at temperatures below 90°C and that expands and releases from the compressed state at a temperature that is 90°C or higher is provided as a heat transfer suppression sheet, it is possible to cope with expansion of a battery cell due to normal charging and discharging and to exhibit an elastic performance even during thermal runaway, and have completed the present invention.

Hereinafter, a heat transfer suppression sheet and a battery pack according to an embodiment of the present invention will be described in detail. Note that, the present invention is not limited to the embodiment described below, and can be freely changed and implemented without departing from the gist of the present invention.

### 1. Heat Transfer Suppression Sheet

First, the heat transfer suppression sheet will be described in detail.

### <<First Embodiment>>

The heat transfer suppression sheet according to the present invention includes an elastic body that maintains a compressed state at temperatures below 90°C and that expands and releases from the compressed state at a temperature that is 90°C or higher. The elastic body itself may be a common one, and for example, a rubber or a thermoplastic elastomer can be appropriately used as an elastic material.

The rubber may be either a synthetic rubber or a natural rubber, and examples of the synthetic rubber include a styrene butadiene rubber, a butadiene rubber, a chloroprene rubber, an isoprene rubber, a butyl rubber, an ethylene propylene rubber, a nitrile rubber, a silicone rubber, a fluoro rubber, an acrylic rubber, a urethane rubber, a polysulfide rubber, and an epichlorohydrin rubber.

Examples of the thermoplastic elastomer include polystyrene-based, polyolefin-based, vinyl chloride-based, polyurethane-based, polyester-based, polyamide-based, and polybutadiene-based thermoplastic elastomers. The elastomer may be either porous or non-porous. Note that, in the case of being porous, the cell structure may be either a closed-cell type or an open-cell type.

In order to maintain the elastic body in a compressed state, in the present embodiment, a binder material is blended into the elastic material and the mixture is processed into a predetermined shape. The binder material is preferably an organic binder in consideration of melting at a temperature that is 90°C or higher to release the elastic body from the compressed state. Examples of the organic binder include acrylic, methacrylic, styrene-based, and butadiene-based resins. A blending amount of the binder material can be appropriately selected according to the type of the binder material, a degree of compression of the elastic body, and an elastic ability of the elastic body, and the binder material is appropriately 5 mass% to 30 mass% of a total mass of an elastic body 1.

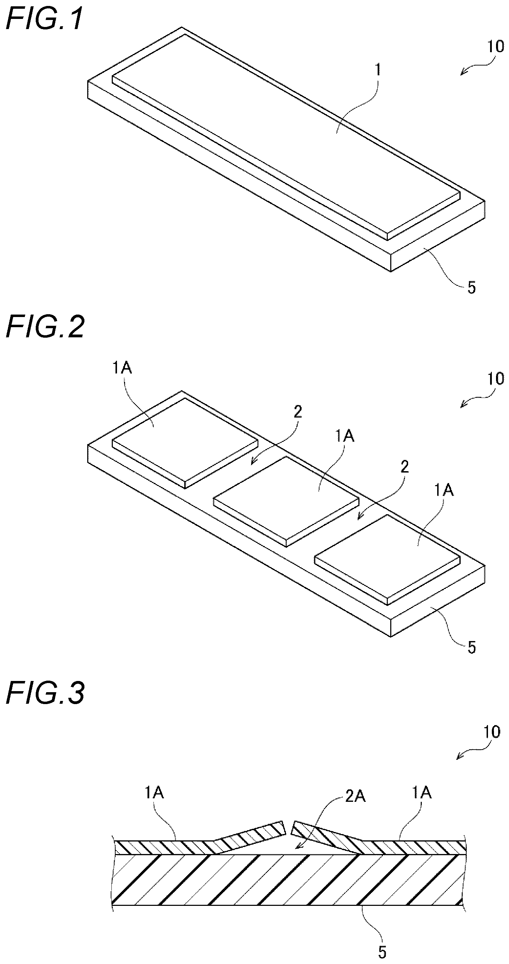

As shown in Fig. 1, the heat transfer suppression sheet 10 may be configured by stacking the elastic body 1 in a compressed state and a heat insulation material 5. In Fig. 1, the elastic body 1 is disposed on only one surface of the heat insulation material 5, but may be disposed on both surfaces of the heat insulation material 5. In addition, surfaces of the elastic body 1 and the heat insulation material 5 may be bonded to each other over the entire surface, or may be partially bonded to each other in a spot-like manner. By bonding the elastic body 1 to the heat insulation material 5, handleability of a heat transfer suppression sheet 10 is improved.

Note that, since the elastic body 1 is released from the compressed state and the elastic body 1 expands in a thickness direction and a surface direction, in the case of partial bonding so as not to hinder the expansion in the surface direction, it is preferable that a central portion of the elastic body 1 is bonded to the heat insulation material 5.

As shown in Fig. 1, the elastic body 1 has a shape slightly smaller than the heat insulation material 5 in consideration of the expansion in the surface direction, but the elastic body 1 may have a shape same as the heat insulation material 5. In the case where the elastic body 1 and the heat insulation material 5 have the same shape, when the elastic body 1 expands, the elastic body 1 also spreads in a space around the heat insulation material 5, and in the case where the heat transfer suppression sheet 10 is applied to, for example, a battery pack, it is expected to protect a battery cell adjacent to a battery cell that has experienced thermal runaway.

As shown in Fig. 2, the elastic body 1 may be compose of a plurality of elastic body split pieces 1A. As shown in Fig. 2, the plurality of elastic body split pieces 1A are arranged at a substantially equal interval on the surface of the heat insulation material 5, and a void 2 is formed between the adjacent elastic body split pieces 1A. Since the elastic body split piece 1A is in a compressed state, when the temperature is lower than 90°C, the void 2 serves as an air flow path to impart a cooling effect, and thus a heat insulation performance of the heat transfer suppression sheet 10 is enhanced.

On the other hand, at a temperature that is 90°C or higher, the individual elastic body split pieces 1A expand to close the voids 2, thereby improving the elastic performance. In addition, as shown in Fig. 3, end surfaces of the adjacent elastic body split pieces 1A come into contact with each other to form a mountain-shaped void 2A. This mountain-shaped void 2A serves as an air flow path to impart a cooling effect, and thus the heat insulation performance of the heat transfer suppression sheet 10 is enhanced at 90°C or higher.

### <<Second Embodiment>>

In the first embodiment, the compressed state is maintained by blending the binder material to the elastic material, but in the present embodiment, the compressed state is maintained by a heat-shrinkable packaging body.

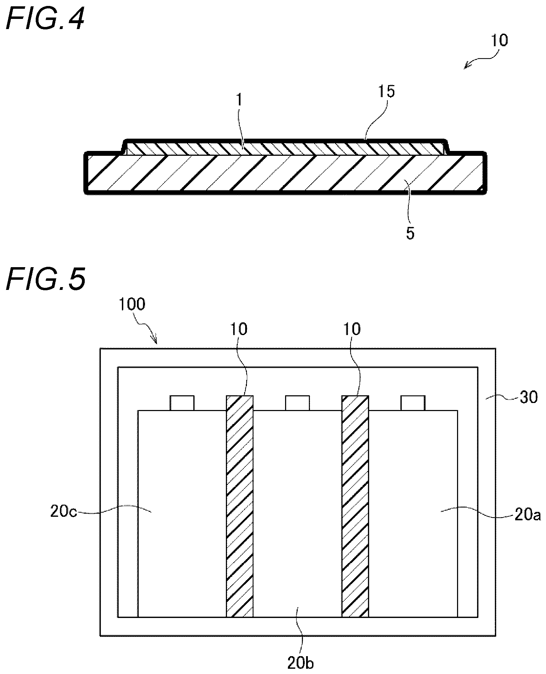

That is, as shown in Fig. 4, the elastic body 1 made of the above elastic material is stacked with the heat insulation material 5, a front end is surrounded by a heat-shrinkable packaging body 15, and the packaging body 15 is shrunk by applying heat. Although the packaging body 15 is indicated by a thick solid line in the drawing, the packaging body 15 surrounds the entire stacked body of the elastic body 1 and the heat insulation material 5 with almost no gap. In addition, the shape of the heat insulation material 5 hardly changes, and the elastic body 1 is shrunk by the packaging body 15 and has an area slightly smaller than that of the heat insulation material 5.

As in the first embodiment, the elastic body 1 can be composed of the plurality of elastic body split pieces 1A, and the elastic body 1 and the heat insulation material 5 can be bonded to each other partially or entirely.

As the packaging body 15, a sheet or film made of a heat-shrinkable resin can be used, and the packaging body 15 may be non-porous or porous. In the case of being porous, the packaging body 15 is broken starting from pores at a temperature that is 90°C or higher, and the elastic body 1 easily expands.

Examples of the heat-shrinkable resin for the packaging body 15 include a polyethylene, a polypropylene, a polystyrene, a polyethylene terephthalate, and vinyl chloride. A thickness of the packaging body 15 is not limited as long as the compressed state of the elastic body 1 can be maintained, but when the thickness of the packaging body 15 is more than 1 mm, it is difficult to follow the shape of the heat insulation material 5, and cracks or fractures may occur. Therefore, it is preferably 1 mm or less, more preferably 0.1 mm or less, and still more preferably 0.05 mm or less. On the other hand, the lower limit is preferably 0.005 mm or more, and more preferably 0.01 mm or more in order to prevent breakage from easily occurring due to friction with a battery cell, for example, in the case of being applied to a battery pack.

### <<Material Configuration of Heat Insulation Material>>

In the first embodiment and the second embodiment described above, the stacked body including the elastic body 1 and the heat insulation material 5 may further include other layers as necessary. In addition, the heat insulation material 5 may have various common material configurations. From the viewpoint of the heat insulation performance, the following materials are preferred.

### [Heat Insulation Material 5]

The heat insulation material 5 contains an organic fiber, an inorganic fiber, and an inorganic particle. Specific examples thereof are shown below.

### <Organic Fiber>

The organic fiber has an effect of imparting flexibility to the heat insulation material 5, and has an effect of increasing strength of the heat insulation material 5 by the organic fiber forming a framework. In addition, when the inorganic particle and other organic fibers are fused to the surface of the organic fiber, the effect of increasing the strength of the sheet and the effect of retaining the shape of the sheet can be further improved. In addition, when the heat insulation material 5 contains the organic fiber in an appropriate content, a plurality of void portions are formed inside the heat insulation material 5, and when the heat insulation material 5 is heated, air and moisture can be released to the outside through the void portions.

A single-component organic fiber may be used as a material for the organic fiber in the heat insulation material 5, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In this case, the core portion is composed of a first organic material, the sheath portion is composed of a second organic material, and a melting point of the first organic material is higher than a melting point of the second organic material.

### (First Organic Material)

In the present embodiment, in the case of using the binder fiber having a core-sheath structure, the first organic material constituting the core portion is not particularly limited as long as it has a melting point higher than that of the sheath portion, that is, the second organic material, present on the outer peripheral surface of the core portion. Examples of the first organic material include at least one kind selected from a polyethylene terephthalate, a polypropylene, and nylon.

### (Second Organic Material)

The second organic material is not particularly limited as long as it has a melting point lower than the first organic material constituting the organic fiber. Examples of the second organic material include at least one kind selected from a polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### (Content of Organic Fiber)

When the content of the organic fiber in the heat insulation material 5 is appropriately controlled, a sufficient framework reinforcement effect can be obtained.

The content of the organic fiber is preferably 5 mass% or more, and more preferably 10 mass% or more with respect to a total mass of the heat insulation material 5. When the content of the organic fiber is too large, a content of the inorganic particle decreases relatively. Therefore, in order to obtain a desired heat insulation performance, the content of the organic fiber is preferably 25 mass% or less, and more preferably 20 mass% or less, with respect to the total mass of the heat insulation material 5.

### (Fiber Length of Organic Fiber)

A fiber length of the organic fiber is not particularly limited, and from the viewpoint of ensuring moldability and processability, an average fiber length of the organic fiber is preferably 10 mm or less.

On the other hand, from the viewpoint of making the organic fiber function as a framework and ensuring compressive strength of the heat transfer suppression sheet, the average fiber length of the organic fiber is preferably 0.5 mm or more.

### <Inorganic Particle>

As the inorganic particle, a single kind of inorganic particle may be used, or two or more kinds of inorganic particles may be used in combination. From the viewpoint of a heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with the small-diameter inorganic particle as a first inorganic particle and the large-diameter inorganic particle as a second inorganic particle.

### <First Inorganic Particle>

### (Oxide Particle)

The oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

In the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, void portions are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when the nanoparticle having a small average primary particle diameter is used as the oxide particle, even in the case where the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine void portions between particles due to a repulsive force caused by static electricity, and the bulk density thereof is low, so that it filled with the particle so as to provide a cushioning property.

Note that, in the case of using the nanoparticle as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), for example, even in the case where battery cells disposed on both sides of the heat transfer suppression sheet thermally expand and a large compressive stress is applied to the heat transfer suppression sheet, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 90°C or lower, the dry silica in which particles can be dispersed can provide a more excellent heat insulation performance than the wet silica.

Note that, the heat transfer suppression sheet according to the present embodiment is preferably produced by a production method in which a mixture containing materials is processed into a sheet by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even in the case of applying a compressive stress, void portions remaining between the nanoparticles and contact points between many particles can suppress the conductive heat transfer, and the heat insulation property of the heat transfer suppression sheet can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, as described above, the heat transfer suppression sheet 10 is preferably interposed between, for example, battery cells, but in a battery cell that has experienced thermal runaway, the temperature rapidly rises to over 200°C and continues to rise to about 700°C. Therefore, it is preferable that the inorganic particle contained in the heat insulation material 5 is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

In the case of using the inorganic hydrate particle as the first inorganic particle, when the average particle diameter thereof is too large, it takes a certain amount of time for the first inorganic particle (inorganic hydrate) near the center of the heat insulation material 5 to reach the thermal decomposition temperature thereof, so that the first inorganic particle near the center of the heat insulation material 5 may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

The heat insulation material used in the present invention may contain an inorganic balloon as the first inorganic particle.

When an inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a barite balloon, and a glass balloon can be used.

### (Content of inorganic balloon: 60 mass% or less with respect to total mass of heat insulation material)

A content of the inorganic balloon is preferably 60 mass% or less with respect to the total mass of the heat insulation material.

### (Average particle diameter of inorganic balloon: 1 µm or more and 100 µm or less)

An average particle diameter of the inorganic balloon is preferably 1 µm or more and 100 µm or less.

### <Second Inorganic Particle>

In the case where the heat transfer suppression sheet 10 contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even in the case where a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, for example, in the case of using the nanoparticle as the first inorganic particle, it is preferable that the heat transfer suppression sheet further contains a particle composed of a metal oxide having a diameter larger than that of the first inorganic particle as the second inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

In the case where at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 90°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 90°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat transfer suppression sheet, when the average primary particle diameter of the second inorganic particle is 1 µm or more and 50 µm or less, the radiant heat transfer can be efficiently suppressed in a high temperature range of 500°C or higher. The average primary particle diameter of the second inorganic particle is more preferably 5 µm or more and 30 µm or less, and most preferably 10 µm or less.

### (Content of Inorganic Particle)

In the present embodiment, when a total content of the inorganic particles in the heat insulation material 5 is appropriately controlled, a sufficient heat insulation property can be ensured in the heat insulation material 5.

The total content of the inorganic particles is preferably 60 mass% or more, and more preferably 70 mass% or more with respect to the total mass of the heat insulation material 5. When the total content of the inorganic particles is too large, the content of the organic fiber decreases relatively. Therefore, in order to obtain a sufficient framework reinforcement effect and inorganic particle retention effect, the total content of the inorganic particles is preferably 95 mass% or less, and more preferably 90 mass% or less, with respect to the total mass of the heat insulation material 5.

Note that, the content of the inorganic particle in the heat insulation material 5 can be calculated, for example, by heating the heat insulation material 5 at 800°C, decomposing organic components, and then measuring the mass of the remaining portion.

The heat insulation material 5 may contain an organic fiber composed of an organic material different from the first organic material, or an inorganic fiber, in addition to the organic fiber and the inorganic particle. In the case where the heat insulation material 5 contains an inorganic fiber, inorganic fibers that are preferably contained in the present embodiment will be described below.

### <Inorganic Fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, and natural mineral-based fibers such as rock wool, a basalt fiber, wollastonite, and a mullite fiber.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross section, a flat cross section, a hollow cross section, a polygonal cross section, and a core cross section. Among them, an irregular cross section fiber having a hollow cross section, a flat cross section, or a polygonal cross section can be preferably used since the heat insulation property is slightly improved.

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and the mechanical strength of the heat insulation material 5 may decrease. On the other hand, when the average fiber length is more than 50 mm, a reinforcement effect can be obtained, but the inorganic fibers may not be able to entangle tightly with each other, or a single inorganic fiber may curl up, and thus the heat insulation property may decrease.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm, and the upper limit is more preferably 10 µm. When the average fiber diameter of the inorganic fiber is less than 1 µm, the mechanical strength of the inorganic fiber may decrease. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat transfer suppression sheet may deteriorate.

### (Content of Inorganic Fiber)

In the present embodiment, in the case where the heat insulation material 5 contains an inorganic fiber, a content of the inorganic fiber is preferably 3 mass% or more and 15 mass% or less with respect to the total mass of the heat insulation material 5.

In addition, the content of the inorganic fiber is preferably 5 mass% or more and 10 mass% or less with respect to the total mass of the heat insulation material 5. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber and the inorganic fiber are entangled with each other to form a three-dimensional network, so that an effect of retaining the inorganic particle and other blending materials to be described later can be further improved.

### <Other Blending Materials>

### (Hot Melt Powder)

In the heat transfer suppression sheet 10, in addition to the binder fiber and the inorganic particle, the mixture may contain a hot melt powder. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle, hardens. Therefore, falling off of the inorganic particle from the heat insulation material 5 can be further suppressed.

Examples of the hot melt powder include those having various melting points, and it is sufficient to select a hot melt powder having an appropriate melting point in consideration of the melting points of the core portion and the sheath portion of the binder fiber used. Specifically, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) and the surrounding molten sheath portion, and the hot melt powder present in gaps in the inorganic particle firstly harden. As a result, the position of the organic fiber can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, a setting tolerance of the heating temperature in the heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

In the case where the hot melt powder is contained in the materials of the heat insulation material 5 in order to suppress the falling off of the inorganic particle, a powder falling suppression effect can be obtained even when the content thereof is very small. Therefore, the content of the hot melt powder is preferably 0.5 mass% or more, and more preferably 1 mass% or more, with respect to the total mass of the materials of the heat insulation material.

On the other hand, when the content of the hot melt powder is increased, the content of the inorganic particle or the like decreases relatively. Therefore, in order to obtain a desired heat insulation performance, the content of the hot melt powder is preferably 5 mass% or less, and more preferably 4 mass% or less, with respect to the total mass of the materials of the heat insulation material.

In the case where the hot melt powder is contained as the material for the heat insulation material 5, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle can be prevented.

Note that, the heat insulation material 5 can further contain other binders, colorants, and the like, if necessary. All of these are useful for reinforcing the heat insulation material 5 and improving the moldability, and the total amount thereof is preferably 10 mass% or less with respect to the total mass of the heat insulation material 5.

### 2. Battery Pack

Next, a battery pack will be described in detail.

The battery pack according to the present invention includes the above heat transfer suppression sheet 10. That is, as shown in Fig. 5, a battery pack 100 includes a plurality of battery cells 20a, 20b, and 20c, and the above heat transfer suppression sheet 10, and the battery cells 20a, 20b, and 20c are connected in series or in parallel. The heat transfer suppression sheet 10 is interposed between the battery cell 20a and the battery cell 20b and between the battery cell 20b and the battery cell 20c. In addition, the battery cells 20a, 20b, and 20c and the heat transfer suppression sheet 10 are housed in a battery case 30.

In the battery pack 100 configured in this manner, at temperatures below 90°C, the expansion associated with charging and discharging of the battery cells 20a, 20b, and 20c is absorbed by the elastic body 1. On the other hand, at a temperature that is 90°C or higher, the elastic body 1 expands, and an interval between the battery cell that has experienced thermal runaway and a battery cell adjacent thereto is widened for protection. In addition, the heat insulation material 5 can suppress heat propagation to adjacent battery cells.

Note that, the battery pack 100 is not limited to the battery pack 100 shown in Fig. 5. For example, the heat transfer suppression sheet 10 may be disposed not only between the battery cell 20a and the battery cell 20b and between the battery cell 20b and the battery cell 20c, but also between the battery cells 20a, 20b, and 20c and the battery case 30, or may be pasted to an inner surface of the battery case 30.

In the battery pack 100 configured in this manner, in the case where a certain battery cell ignites, it is possible to suppress the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cells 20a, 20b, and 20c and the battery case 30, it is not necessary to newly prepare a flame retardant material or the like, and a safe battery pack 100 can be easily formed at a low cost.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2022-181036) filed on November 11, 2022, and the contents thereof are incorporated herein by reference.

### REFERENCE SIGNS LIST

1 elastic body
1A elastic body split piece
2, 2A void
5 heat insulation material
10 heat transfer suppression sheet
15 packaging body
20a, 20b, 20c battery cell
30 battery case
100 battery pack

## Claims

1. A heat transfer suppression sheet comprising:
an elastic body that remains in a compressed state at temperatures below 90°C and that is released from the compressed state at a temperature that is 90°C or higher.

2. The heat transfer suppression sheet according to claim 1, wherein the elastic body is maintained in the compressed state by a blended binder material.

3. The heat transfer suppression sheet according to claim 2, wherein the elastic body is stacked with a heat insulation material.

4. The heat transfer suppression sheet according to claim 3, wherein the elastic body and the heat insulation material are at least partially bonded to each other.

5. The heat transfer suppression sheet according to claim 3 or 4, wherein the elastic body is composed of a plurality of elastic body split pieces, and the elastic body split pieces are scattered on a surface of the heat insulation material.

6. The heat transfer suppression sheet according to claim 5, wherein when released from the compressed state, peripheral end surfaces of the adjacent elastic body split pieces abut against each other to fill a gap between the elastic body split pieces or to form a mountain-shaped void.

7. The heat transfer suppression sheet according to claim 1, wherein the elastic body is stacked with a heat insulation material, and the compressed state is maintained by a heat-shrinkable surrounding body.

8. The heat transfer suppression sheet according to claim 7, wherein the elastic body and the heat insulation material are at least partially bonded to each other.

9. The heat transfer suppression sheet according to claim 7 or 8, wherein the elastic body is composed of a plurality of elastic body split pieces, and the elastic body split pieces are scattered on a surface of the heat insulation material.

10. The heat transfer suppression sheet according to claim 9, wherein when released from the compressed state, peripheral end surfaces of the adjacent elastic body split pieces abut against each other to fill a gap between the elastic body split pieces or to form a mountain-shaped void.

11. A battery pack comprising:
a plurality of battery cells; and
the heat transfer suppression sheet according to claim 1, wherein
the plurality of battery cells are connected in series or in parallel.
